# FASCICULE DE BREVET EUROPEEN

(11) **EP 3 250 974 B1**
(45) Date de publication et mention de la délivrance du brevet: **08.09.2021**
(21) Numéro de dépôt: 16707846.8
(22) Date de dépôt: 28.01.2016
(51) Int. Cl.: G05B 23/02, G06F 11/34, G01M 15/14

(54) **PROCÉDÉ, SYSTÈME ET PROGRAMME D'ORDINATEUR POUR PHASE D'APPRENTISSAGE D'UNE ANALYSE ACOUSTIQUE OU VIBRATOIRE D'UNE MACHINE**
VERFAHREN, SYSTEM UND COMPUTERPROGRAMM FÜR DIE LERNPHASE EINER SCHALL- ODER SCHWINGUNGSANALYSE EINER MASCHINE
METHOD, SYSTEM AND COMPUTER PROGRAM FOR LEARNING PHASE OF AN ACOUSTIC OR VIBRATORY ANALYSIS OF A MACHINE

(30) Priorité: 30.01.2015 FR 1550735
(43) Date de publication de la demande: 06.12.2017
(73) Titulaire: SAFRAN AIRCRAFT ENGINES, 75015 Paris (FR)
(72) Inventeur: BENSE, William, 77550 Moissy-Cramayel Cedex (FR); BOITEUX, Jean-Michel, 77550 Moissy-Cramayel Cedex (FR); DUPONT, Audrey, 77550 Moissy-Cramayel Cedex (FR); GRIFFATON, Julien, Christian, Pascal, 77550 Moissy-Cramayel Cedex (FR); LACAILLE, Jérôme, Henri, Noël, 77550 Moissy-Cramayel Cedex (FR)
(74) Mandataire: Brevalex
(86) Numéro de dépôt international: PCT/FR2016/050176
(87) Numéro de publication internationale: WO 2016/120566

(56) Documents cités:
- FR-A1- 2 947 335
- JP-A- 2014 059 910
- US-A1- 2012 290 879
- S.W WEGERICH ET AL: "Nonparametric modeling of vibration signal features for equipment health monitoring", AEROSPACE CONFERENCE, 2008 IEEE, vol. 7, 1 janvier 2003 (2003-01-01), pages 3113-3121, XP055231408, ISSN: 1095-323X, DOI: 10.1109/AERO.2003.1234154 ISBN: 978-1-4244-1488-8
- Paul Hayton ET AL: "Support Vector Novelty Detection Applied to Jet Engine Vibration Spectra", Advances in Neural Information Processing Systems 13, 31 December 2001 (2001-12-31), pages 946-952, XP055584038, Retrieved from the Internet: URL:http://citeseerx.ist.psu.edu/viewdoc/d ownload?doi=10.1.1.21.2711&rep=rep1&type=p df [retrieved on 2019-04-29]

## Description

### DOMAINE TECHNIQUE

L'invention se rapporte au domaine de la surveillance d'une machine, par exemple un moteur tel qu'un moteur d'aéronef. En particulier, l'invention concerne un procédé et un système d'analyse d'une machine, par exemple une analyse acoustique ou vibratoire, pour en détecter, reconnaître ou en pronostiquer des anomalies.

### ÉTAT DE LA TECHNIQUE ANTÉRIEURE

Une machine est un système mécanique soumis à des contraintes qui peuvent engendrer l'usure de ses composants. On cherche donc d'une manière générale à surveiller le plus efficacement possible l'état d'une machine pour en détecter des endommagements, reconnaitre ces endommagements parmi un ensemble d'endommagements possibles pour la machine ou encore prédire leur apparition.

Si une machine, par exemple un moteur d'aéronef, présente l'inconvénient de générer du bruit, on peut toutefois imaginer utiliser cet inconvénient pour réaliser un diagnostic ou un pronostic d'endommagements de manière non intrusive. En effet, les moteurs d'avions et les machines tournantes en général peuvent présenter des endommagements dont certains peuvent être repérés à l'oreille.

On connaît ainsi de la publication US 2007/0255563 A1 un système de surveillance de turboréacteur d'avion selon lequel on enregistre des signaux acoustiques issus du turboréacteur en fonctionnement à l'aide de deux microphones positionnés sous la nacelle du turboréacteur, et on compare les signaux acquis à des signaux de référence au moyen d'un algorithme de reconnaissance vocale. On peut ainsi identifier des signatures représentatives de l'état du turboréacteur parmi les signaux acquis.

De manière similaire, il a été envisagé de réaliser une telle surveillance en exploitant non pas des signaux acoustiques générés par la machine mais des signaux vibratoires parcourant les différents composants de la machine. On peut à cet égard se reporter à la demande de brevet WO 2011/054867 A1.

De tels systèmes de surveillance exploitent une base de données dans laquelle sont enregistrées des caractéristiques de la limite entre signaux représentatifs d'un fonctionnement normal et signaux représentatifs d'un fonctionnement anormal. Plus concrètement, la base de données stocke un ou plusieurs seuils pour un ou plusieurs indicateurs calculés à partir de signaux délivrés par un capteur associé à la machine, par exemple par un microphone disposé au sein de la machine. La base de données peut notamment être renseignée lors d'une phase d'apprentissage en déterminant statistiquement les seuils d'un certain nombre d'indicateurs. L'interrogation de la base de données à partir des indicateurs calculés à partir d'un signal délivré par le capteur est réalisée lors d'une phase de test pour déterminer l'état de fonctionnement normal ou anormal d'une machine testée.

Une difficulté lors de la phase d'apprentissage réside dans le fait que peu de données représentatives d'un fonctionnement normal mais surtout d'un fonctionnement anormal sont disponibles, ce qui peut être insuffisant pour réaliser des statistiques. C'est le cas, par exemple, lorsque l'apprentissage est réalisé au moyen d'un banc d'essai ou d'une machine en cours de développement dont la configuration peut être amenée à changer. Avec un nombre limité de données d'apprentissage, en particulier avec un faible nombre de données anormales alors disponibles, les seuils estimés statistiquement ne sont pas optimisés, ce qui limite la qualité de la détermination de l'état de fonctionnement en phase de test.

Or on souhaite disposer d'une base de données de bonne qualité pour satisfaire un taux de bonne détection d'anomalies important et un taux de fausse détection d'anomalies réduit.

JP 2014 059910 A décrit un procédé de détection de signes d'anomalies dans lequel un seuil est calculé pour juger ou non de la présence d'une anomalie. Ce seuil est d'autant plus élevé que les données d'apprentissage sont insuffisantes pour permettre de créer un modèle caractéristique d'un comportement sain qui soit suffisamment fiable. US 2012/290879 A1 décrit un procédé similaire à celui de JP 2014 059910 A.

### EXPOSÉ DE L'INVENTION

L'invention vise à répondre à cette problématique et propose pour ce faire un procédé selon la revendication 1.

Certains aspects préférés mais non limitatifs de ce procédé sont définis par les revendications 2 à 5.

L'invention porte également sur un produit programme d'ordinateur selon la revendication 6 comprenant des instructions de code pour l'exécution des étapes du procédé, lorsque ledit programme est exécuté sur un ordinateur. Et elle s'étend à un système d'analyse de l'état de fonctionnement d'une machine, tel que défini par la revendication 7.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre un exemple de moyens matériels mis en œuvre dans un mode de réalisation possible du système selon l'invention ;
- la figure 2 représente les différentes opérations mises en œuvre dans l'étape d'apprentissage du procédé selon l'invention ;
- les figures 3a et 3b illustrent les données disponibles pour le calcul des indicateurs selon à une mise en œuvre conventionnelle et selon une mise en œuvre conforme à l'invention ;
- la figure 4 illustre le spectre d'un signal caractéristique d'un fonctionnement sain de la machine et deux signaux résultants de la soustraction audit signal caractéristique d'un fonctionnement sain respectivement d'un signal représentatif d'un fonctionnement normal et d'un signal représentatif d'un fonctionnement anormal ;
- les figures 5a et 5b illustrent le calcul d'un exemple indicateur pouvant être réalisé dans le cadre de l'invention.

### EXPOSÉ DÉTAILLÉ DE MODES DE RÉALISATION PARTICULIERS

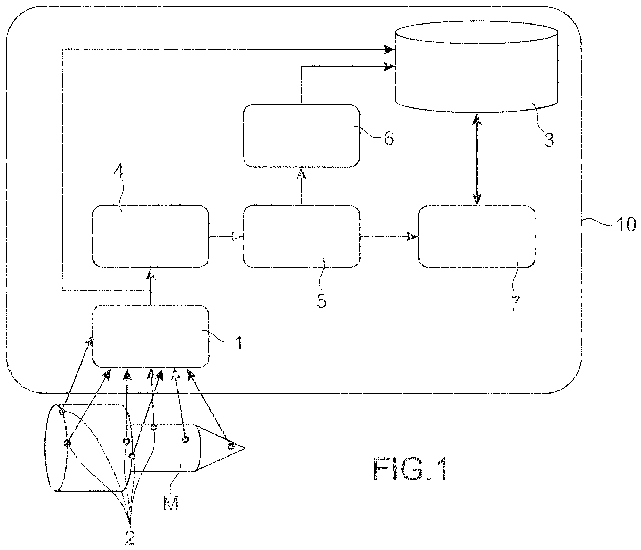

La figure 1 illustre un exemple de moyens matériels mis en œuvre dans différents modes de réalisation possibles du système et procédé d'analyse de l'état de fonctionnement d'une machine testée M conformes à l'invention.

La machine testée M peut être un moteur de véhicule aérien ou terrestre, par exemple un moteur d'aéronef comme illustré schématiquement sur la figure 1. L'invention n'est toutefois pas limitée à un tel exemple illustratif, mais s'étend d'une manière générale à l'étude de tout système mécanique générant du bruit ou des vibrations.

Au moins un capteur 2 est associé à la machine M. Il s'agit par exemple d'un microphone positionné au sein de la machine M, par exemple à l'intérieur de la nacelle d'un moteur d'aéronef, soit directement sur la face interne de la nacelle soit sur le moteur. Il peut également s'agir d'un capteur de vibrations, tel qu'un accéléromètre ou une jauge de contrainte, positionné de préférence sur le moteur.

On utilise de préférence une pluralité de capteurs, par exemple une dizaine de capteurs, ce qui permet notamment de les répartir entre les différents composants de la machine, par exemple entre le carter de soufflante, le carter principal et le cône d'éjection des gaz d'un moteur d'aéronef.

Le ou les capteurs 2 sont idéalement situés à proximité des composants de la machine à surveiller. Néanmoins un capteur n'est pas nécessairement disposé sur le composant surveillé, et l'on peut au contraire recourir à un capteur d'ambiance qui présente l'avantage de permettre la surveillance de plusieurs composants. En particulier, on peut placer un capteur à proximité d'un des composants les plus critiques, ce qui n'empêche pas de surveiller d'autres composants.

Le système comporte une unité de traitement informatique 10 dotée d'un module d'acquisition 1 de au moins un signal délivré par au moins un capteur 2 associé à la machine M. L'unité de traitement 10 comporte également une base de données de référence 3 dans laquelle sont enregistrés un ou plusieurs seuils pour un ou plusieurs indicateurs calculés à partir de signaux délivrés par au moins un capteur 2 associé à la machine. En phase de test, le dépassement ou non de ce ou de ces seuils par le ou les indicateurs calculés à partir de signaux correspondant à une machine testée permet de déterminer si la machine fonctionne normalement ou anormalement. Dans certains modes de réalisation de l'invention, la détection d'anomalies s'accompagne d'une classification de l'anomalie détectée (entre par exemple une classe de moteurs à turbine défectueuse et une autre classe de moteurs à compresseur défectueux).

Le système et procédé selon l'invention permettent plus précisément de détecter des anomalies à partir de symptômes acoustiques/vibratoires tout en étant optimisés pour fonctionner avec peu de données d'apprentissage pour constituer la base de données de référence.

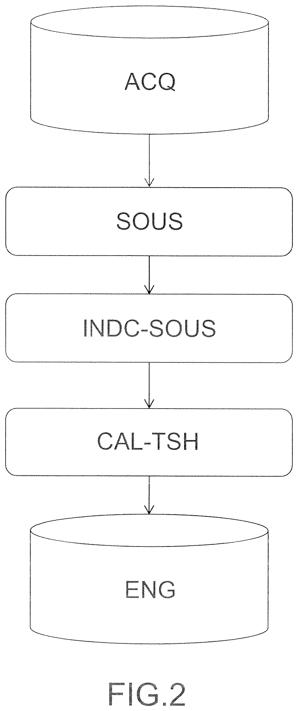

En référence à la figure 2, l'étape d'apprentissage comprend les opérations suivantes mises en œuvre par différents modules 4, 5, 6 de l'unité de traitement informatique 10. L'étape d'apprentissage comprend tout d'abord une opération d'acquisition « ACQ », au moyen du module d'acquisition 1 préalablement présenté, de signaux caractéristiques d'un fonctionnement normal de la machine et de signaux caractéristiques d'un fonctionnement anormal de la machine. Ces signaux sont enregistrés dans la base de données de référence 3. Les signaux caractéristiques d'un fonctionnement normal de la machine sont par exemple acquis au cours des premiers vols de la machine lorsque les composants de celle-ci ont le maximum de chances d'être sains. A contrario, les signaux caractéristiques d'un fonctionnement anormal de la machine sont acquis au moyen d'une machine dont on sait, par exemple par expertise, qu'elle présente une anomalie.

L'étape d'apprentissage comprend ensuite, après une éventuelle opération de filtrage et de normalisation des signaux acquis qui sera présentée par la suite, une opération « SOUS » de calcul, pour chacun des signaux caractéristiques d'un fonctionnement normal, d'au moins un signal dit d'écart par mise en œuvre d'une opération mathématique ayant pour attributs le signal caractéristique d'un fonctionnement normal et l'un des signaux caractéristiques d'un fonctionnement normal ou anormal autres que ledit signal caractéristique d'un fonctionnement normal.

Cette opération « SOUS » est mise en œuvre par un module de calcul de signaux d'écart 4. L'opération mathématique est réalisée entre le signal caractéristique d'un fonctionnement normal et chacun des signaux caractéristiques d'un fonctionnement normal ou anormal autres que ledit signal caractéristique d'un fonctionnement normal. Selon l'invention, l'opération mathématique est une soustraction. L'opération « SOUS » consiste alors, pour chacun des signaux caractéristiques d'un fonctionnement normal, à former des signaux d'écart par soustraction au signal caractéristique d'un fonctionnement normal de chacun des signaux caractéristiques d'un fonctionnement normal ou anormal autres que ledit signal caractéristique d'un fonctionnement normal.

Dans un mode de réalisation possible, l'opération « SOUS » comprend également pour chacun des signaux caractéristiques d'un fonctionnement anormal, le calcul d'au moins un signal dit d'écart par mise en œuvre d'une opération mathématique ayant pour attributs le signal caractéristique d'un fonctionnement anormal et l'un des signaux caractéristiques d'un fonctionnement anormal autres que ledit signal caractéristique d'un fonctionnement anormal.

Suite à l'opération « SOUS », l'étape d'apprentissage comprend une opération « INDC-SOUS », mise en œuvre par un module de calcul d'indicateurs 5, consistant pour chacun des signaux d'écart, à calculer un ou plusieurs indicateurs.

Cette opération « INDC-SOUS » est suivie d'une opération d'estimation des seuils d'endommagements « CAL-TSH », mise en œuvre par un module de détermination de seuils d'indicateurs 6, consistant, pour chacun des indicateurs des signaux d'écart, à déterminer un seuil de l'indicateur représentatif d'une limite entre fonctionnement normal et fonctionnement anormal de la machine. Le seuil permet de discriminer les signaux d'écart formés à partir du signal caractéristique d'un fonctionnement normal et d'un autre signal caractéristique d'un fonctionnement normal des signaux d'écart formés à partir du signal caractéristique d'un fonctionnement normal et d'un signal caractéristique d'un fonctionnement anormal.

A titre d'exemples, l'opération « CAL-TSH » d'estimation des seuils d'endommagements peut être réalisée en calculant la médiane spatiale entre le premier et le dernier indicateur, ou en venant exclure les points aberrants, ou en ayant recours à une machine à vecteurs de support, ou à un réseau de neurones, ou encore à des arbres de décision.

L'étape d'apprentissage comprend ensuite une opération « ENG », mise en œuvre par le module de détermination de seuils d'indicateurs 6, consistant à enregistrer le ou les seuils ainsi calculés dans la base de données de référence 3.

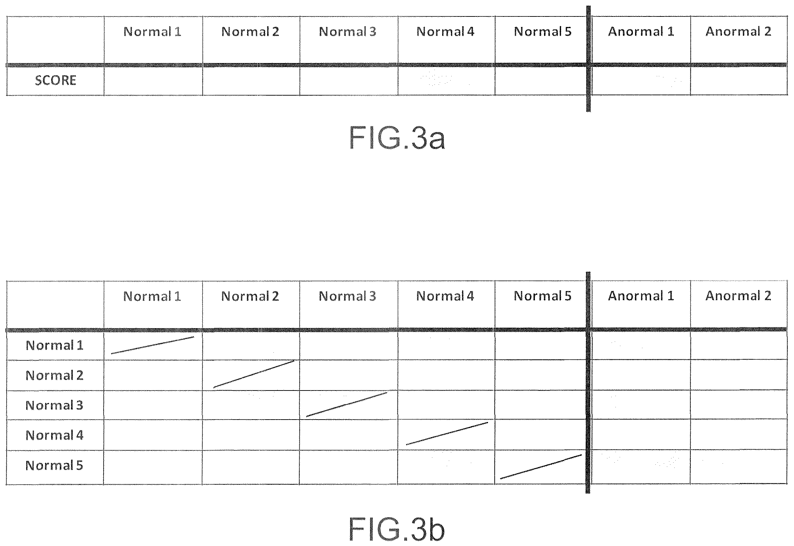

Les figures 3a et 3b illustrent l'intérêt de la phase d'apprentissage selon l'invention dans le cadre d'un exemple où à l'issue de l'opération d'acquisition « ACQ », cinq signaux caractéristiques d'un fonctionnement normal Normal 1 à Normal 5 et deux signaux caractéristiques d'un fonctionnement anormal Anormal 1 et Anormal 2 sont enregistrés dans la base de données 3.

Comme représenté sur la figure 3a, un algorithme classique assigne un score à chaque signal (via le calcul d'un indicateur, par exemple sa variance) et cherche à différencier les cinq scores des signaux sains des deux scores des signaux anormaux pour calculer une limite ou seuil entre les scores des signaux normaux et les scores des signaux anormaux. De cette manière, pendant la phase de test, pour classifier un signal inconnu, on calcule le score de ce signal inconnu et on lui attribue le statut normal/anormal en fonction de sa position par rapport au seuil déterminé lors de l'étape d'apprentissage.

Dans le cadre de l'invention, et comme représenté sur la figure 3b, on forme des couples de signaux composés tous de manière identique : un premier signal sain, et un signal de comparaison sain ou anormal. Dans un exemple de réalisation, on soustrait le signal de comparaison au premier signal sain pour former un signal d'écart. On assigne cette fois un score à chaque couple de signaux (signal d'écart) et on cherche à différencier les vingt couples de type signal sain soustrait au premier signal sain des dix couples de type signal anormal soustrait au premier signal sain. On notera que l'on ne compare pas un signal à lui-même d'où le nombre de vingt couples de signaux de type signal sain soustrait à un premier signal sain et les cases barrées non utilisées du tableau de la figure 3b. L'invention repose ainsi sur l'idée de multiplier le nombre de signaux à partir desquels les indicateurs sont calculés et les seuils sont déterminés, en ayant recours aux signaux d'écart plus nombreux que les signaux acquis. On vient ainsi par exemple comparer les signaux acquis deux par deux et classifier cette différence plutôt que classifier chacun des signaux acquis pris séparément.

En ayant recours aux signaux d'écart, obtenus par exemple en comparant les signaux deux à deux, on vient multiplier le nombre de signaux que l'on va chercher à différencier pour déterminer le seuil. Reprenant l'exemple ci-dessus, au lieu de déterminer un seuil en cherchant à différencier cinq signaux sains de deux signaux anormaux, on vient déterminer un seuil en cherchant à différencier vingt signaux d'écart correspondant aux vingt couples de type signal sain soustrait à un premier signal sain de dix signaux d'écart correspondant aux dix couples de type signal anormal soustrait à un premier signal sain. Il découle de cette augmentation du nombre de signaux disponibles une détermination du seuil plus précise.

Bien entendu, une fois l'étape d'apprentissage terminée, le test d'une machine peut être réalisé. Ce test est réalisé en ayant recours à des indicateurs définis de manière identique aux indicateurs calculés à partir des signaux d'écart. Ainsi une étape de test d'une machine M au moyen d'un signal délivré par le capteur associé à la machine testée comprend les opérations suivantes :
- formation, par le module de calcul de signaux d'écart 4, d'un signal de test élaboré par mise en œuvre de ladite opération mathématique, une soustraction, avec pour attributs le signal délivré par le capteur et un signal de référence préalablement enregistré dans la base de données de référence lors de l'étape d'apprentissage ;
- calcul, par le module de calcul d'indicateurs 5, d'un ou plusieurs indicateurs du signal de test ;
- comparaison, par un module de détection d'anomalies 7, du ou des indicateurs du signal de test au seuil correspondant enregistré dans la base de données de référence pour déterminer l'état de fonctionnement normal ou anormal de la machine testée M.

Le signal de référence est typiquement un signal caractéristique d'un fonctionnement normal de la machine. Il peut également s'agir d'un signal caractéristique d'un fonctionnement anormal de la machine, par exemple lorsque que l'on cherche à identifier une signature de panne.

Le signal de référence caractéristique d'un fonctionnement normal (respectivement anormal) peut être l'un des signaux caractéristiques d'un fonctionnement normal (respectivement anormal) utilisés au cours de la phase d'apprentissage, ou être un signal élaboré à partir de l'un et/ou l'autre des signaux caractéristiques d'un fonctionnement normal (respectivement anormal) utilisés au cours de la phase d'apprentissage, comme par exemple la moyenne des signaux caractéristiques d'un fonctionnement normal (respectivement anormal) utilisés au cours de la phase d'apprentissage.

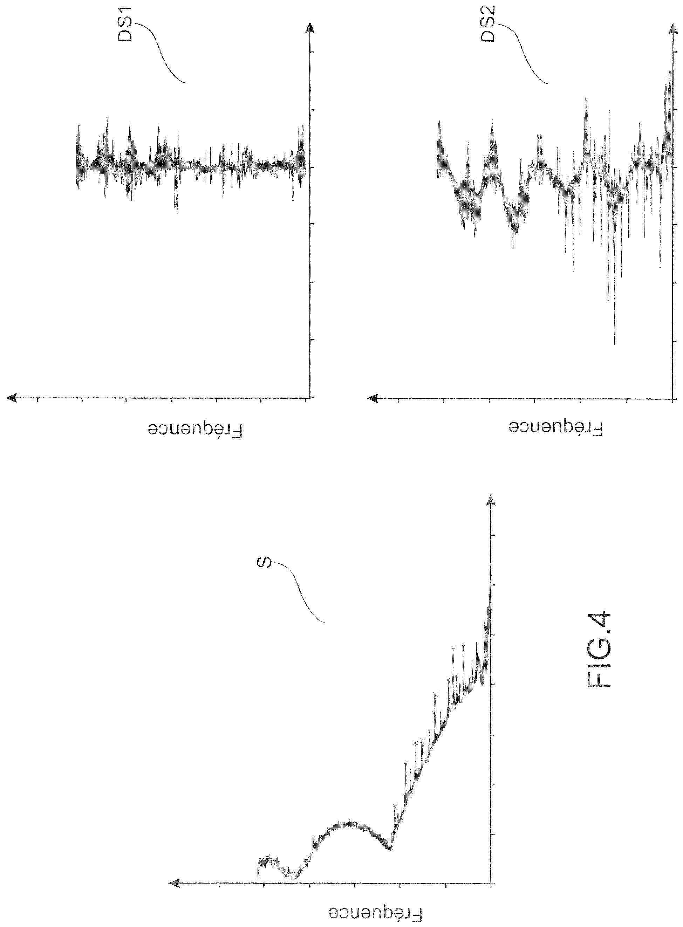

Dans le cadre de l'invention, les signaux délivrés par le capteur sont de préférence transformés en signaux fréquentiels préalablement à la formation des signaux d'écart et des signaux de test. La comparaison des signaux entre eux et le calcul du ou des indicateurs s'effectuent ainsi dans le domaine spectral. On a ainsi représenté sur la figure 4 le spectre S d'un signal de référence caractéristique d'un fonctionnement normal de la machine, le spectre ΔS1 du signal correspondant à la différence entre le signal de référence et un autre signal représentatif d'un fonctionnement normal de la machine, et le spectre ΔS2 du signal correspondant à la différence entre le signal de référence et un autre signal représentatif d'un fonctionnement anormal de la machine.

Dans un mode de réalisation, l'étape d'apprentissage et l'étape de test comprennent une opération de filtrage (débruitage) et de normalisation des signaux acquis mise en œuvre respectivement avant la formation des signaux d'écart et avant la formation des signaux de test.

Ce filtrage peut être réalisé au moyen d'un filtre de Kalman ou d'un filtre particulaire. Alternativement, il peut prendre la forme d'une transformée de Fourier, d'une analyse en composantes principales, d'une transformée en ondelettes, ou encore de toute méthode de normalisation de signaux vibratoires.

Dans un autre mode de réalisation, ce filtrage prend la forme d'une projection dans le domaine des ordres, ce qui permet de faciliter la lecture des spectrogrammes et notamment des raies d'énergie importante. Selon ce mode de réalisation, les signaux délivrés par le capteur sont échantillonnés sur une période de mesure au cours de laquelle le régime moteur de la machine est variable, les signaux ainsi échantillonnés sont synchronisés en fonction des variations du régime moteur sur la période de mesure, et les signaux échantillonnés synchronisés sont transformés en signaux fréquentiels pour obtenir des raies fréquentielles ordonnées selon le régime moteur.

On trouvera de plus amples détails sur cette projection dans le domaine des ordres dans la demande de brevet WO 2011/054867 A1 citée précédemment. On retiendra ici qu'elle consiste à réaliser une mesure en régime variable, à échantillonner le signal mesuré à fréquence constante puis à le ré-échantillonner à fréquence proportionnelle au régime. Ceci nécessite de déterminer une courbe de parcours angulaire, par exemple par intégration de la courbe représentant l'évolution du régime moteur en fonction du temps, puis de projeter le signal délivré par le capteur sur la courbe de parcours angulaire en réalisant un nouvel échantillonnage qui consiste à prélever des points régulièrement espacés sur la courbe de parcours angulaire.

La description ci-après s'intéresse au traitement des signaux d'écart et des signaux de test pour le calcul d'un ou plusieurs indicateurs de ces signaux. D'une manière générale, le ou les indicateurs doivent permettre de réduire l'information très dense contenue dans les signaux, tout en gardant suffisamment de renseignements caractéristiques pour discriminer les signaux sains des signaux anormaux.

A titre d'exemples d'indicateurs des signaux d'écart et des signaux de test, on peut citer un moment statistique de ces signaux, tel que la variance, la dissymétrie *(skewness),* ou le kurtosis, ou encore l'énergie de ces signaux. Dans tous les cas, il est préférable que la performance des capteurs (dynamique, bande passante, etc.) soit en adéquation avec le type d'indicateur mis en place.

Un autre exemple de calcul d'indicateur consiste à réaliser un comptage du nombre de points du signal comparé à un signal caractéristique d'un fonctionnement normal présents à l'extérieur d'une enveloppe dudit signal caractéristique d'un fonctionnement normal. Pour ce faire, on vient dessiner une enveloppe autour du signal sain (par exemple en le décalant d'une distance fixée d vers le haut et vers le bas, ou en calculant son enveloppe spectrale) et on compte le nombre de points du signal comparé sortant de cette enveloppe.

Un autre exemple de calcul d'indicateur consiste à réaliser un comptage du nombre de pics parmi n pics du signal caractéristique d'un fonctionnement normal qui coïncident avec un pic parmi p pics du signal comparé audit signal caractéristique d'un fonctionnement normal. On retient de préférence les n pics les plus élevés du signal sain et les p pics les plus élevés du signal comparé. Alternativement, on peut retenir pour pics les minima locaux, ce qui permet de détecter non pas les maxima d'énergie mais les chutes brutales. En pratique, les pics peuvent être légèrement décalés d'un signal à l'autre, et l'algorithme est construit de façon à tolérer alors un faible décalage du peigne, c'est-à-dire de l'ensemble des pics.

De manière avantageuse, on choisit n et p différents pour ne pas construire un tableau d'indicateurs symétriques et ainsi, pour ne pas réduire le nombre de données disponibles en phase d'apprentissage pour déterminer le seuil sur l'indicateur représentatif d'une limite entre fonctionnement normal et fonctionnement anormal de la machine.

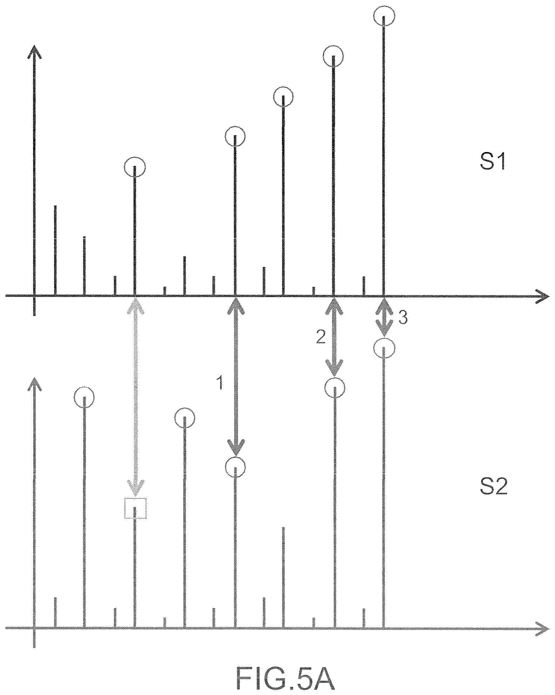

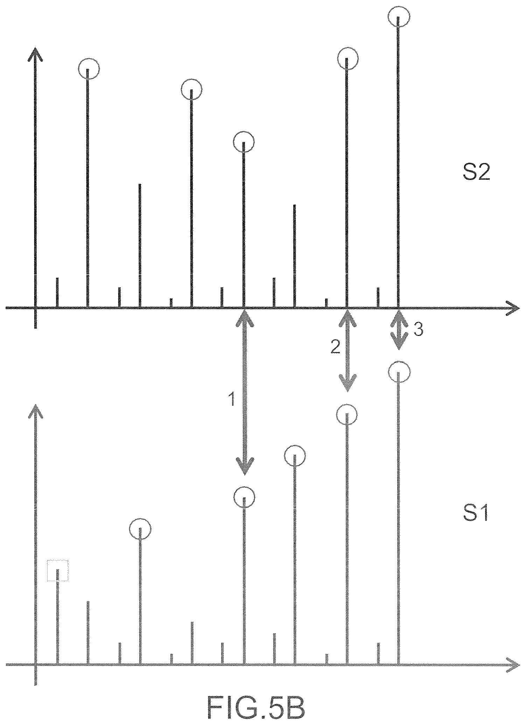

On a ainsi représenté sur la figure 5a le cas où un signal S1 est pris comme signal de référence auquel est comparé un signal S2, et sur la figure 5b le cas où le signal S2 est pris comme signal de référence auquel est comparé le signal S2.

On constate de la figure 5a que si on compare les 5 pics les plus élevés de chacun des signaux S1 et S2, le nombre de pics communs est de trois. En revanche, si on compare les 5 pics les plus élevés du signal de référence S1 aux 6 pics les plus élevés du signal comparé S2, alors le nombre de pics en commun est de quatre.

Sur la figure 5b, que l'on prenne ou pas pour le signal comparé le même nombre de pics les plus élevés que pour le signal de référence, on observe dans les deux cas de figures trois pics en commun sur les cinq pics les plus élevés du signal de référence.

En prenant n et p différents, on obtient des scores différents selon que l'on compare S2 à S1 ou S1 à S2. Ceci permet de diversifier la répartition des scores et donc d'améliorer la description de l'espace des données anormales.

Un autre exemple d'indicateur pouvant être calculé directement à partir des signaux acquis repose sur la théorie des valeurs extrêmes. On vient pour ce faire diviser le spectre des signaux en de nombreux petits intervalles de fréquence (par exemple 400 intervalles). Sur chaque intervalle, on modélise grâce à la théorie des valeurs extrêmes, la distribution des extrema des amplitudes (maximum et minimum) de l'ensemble des spectres sains de référence. On fixe un seuil de tolérance en queue de chacune des deux distributions au-delà, respectivement en deçà, duquel les points du spectre testé seront considérés comme anormaux. On prend comme indicateur le nombre de points anormaux.

Dans un mode de réalisation de l'invention, la détection d'anomalies réalisée au cours d'une étape de test d'une machine s'accompagne d'une classification de l'anomalie détectée (entre par exemple une classe de moteurs à turbine défectueuse et une autre classe de moteurs à compresseur défectueux). Plusieurs méthodes mathématiques peuvent être utilisées pour automatiser cette classification, notamment l'analyse discriminante (où chaque classe d'anomalie est modélisée par une loi gaussienne), les méthodes de partitionnement de données (par exemple selon les k-moyennes), les modèles d'apprentissage supervisés utilisant les machines à vecteurs de support (SVM pour « Support Vector Machines »), etc.

Dans un mode de réalisation de l'invention, on distingue plusieurs phases de renseignement de la base de données de référence.

Dans une phase primaire, correspondant par exemple à l'utilisation d'un banc d'essai ou au développement de la machine, peu de données d'apprentissage saines et anormales sont disponibles. La base de données est alors renseignée par mise en œuvre de l'étape d'apprentissage telle que décrite précédemment.

Dans une phase secondaire, correspondant par exemple au début d'exploitation de la machine, beaucoup de données d'apprentissage saines sont disponibles, mais peu de données anormales. L'étape d'apprentissage peut alors être modifiée pour former un signal caractéristique d'un fonctionnement normal par combinaison de plusieurs signaux distincts caractéristiques d'un fonctionnement normal (moyenne ou médiane des signaux sains de référence de la base d'apprentissage par exemple). Une telle combinaison est en effet plus représentative de la normalité du fonctionnement de la machine qu'un signal sain isolé. L'étape de test est alors modifiée de manière similaire pour calculer un indicateur du signal en venant soustraire à ladite combinaison le signal acquis de la machine testée.

Dans une phase ultérieure, correspondant par exemple à une exploitation à maturité de la machine, de nombreuses données d'apprentissage, tant saines qu'anormales sont disponibles, qui plus est pour chaque type d'anomalie possible. Dans cette phase, il est possible d'assigner de manière conventionnelle un score d'indicateur à chaque signal (et non plus nécessairement à des couples de signaux) puisque les données sont alors suffisamment nombreuses. On classe les données, normales ou anormales (et le type d'anomalie), selon le score des indicateurs.

L'invention n'est bien entendu pas limitée au procédé tel que décrit précédemment, et s'étend comme on l'a compris également à un système configuré pour mettre en œuvre ce procédé, et en particulier à un système d'analyse de l'état de fonctionnement d'une machine, telle qu'un moteur d'aéronef, comprenant un module d'acquisition d'un signal délivré par un capteur associé à la machine et une base de données de référence dans laquelle sont enregistrés un ou plusieurs seuils pour un ou plusieurs indicateurs calculés à partir de signaux délivrés par le capteur associé à la machine, caractérisé en ce qu'il comporte en outre :
- un module de calcul de signaux d'écart 4 configuré pour former, pour chacun des signaux caractéristiques d'un fonctionnement normal, au moins un signal dit d'écart par mise en œuvre d'une opération mathématique ayant pour attributs le signal caractéristique d'un fonctionnement normal et l'un des signaux caractéristiques d'un fonctionnement normal ou anormal autres que ledit signal caractéristique d'un fonctionnement normal ;
- un module de calcul d'indicateurs configuré pour calculer, pour chacun des signaux d'écart, un indicateur ;
- un module de détermination de seuils d'indicateurs configuré pour déterminer, à partir des indicateurs des signaux d'écart, un seuil de l'indicateur représentatif d'une limite entre fonctionnement normal et fonctionnement anormal de la machine, ledit seuil permettant de discriminer les signaux d'écart formés à partir d'un signal caractéristique d'un fonctionnement normal et d'un autre signal caractéristique d'un fonctionnement normal des signaux d'écart formés à partir d'un signal caractéristique d'un fonctionnement normal et d'un signal caractéristique d'un fonctionnement anormal, et pour enregistrer le seuil de l'indicateur dans la base de données de référence.

Et l'invention s'étend également à une mise en œuvre logicielle du procédé, et ainsi à un produit programme d'ordinateur comprenant des instructions de code pour l'exécution des étapes du procédé selon l'invention lorsque ledit programme est exécuté sur un ordinateur.

## Revendications

1. Procédé d'apprentissage d'un ou plusieurs seuils pour un ou plusieurs indicateurs de l'état de fonctionnement d'une machine (M), telle qu'un moteur d'aéronef, calculés à partir de signaux délivrés par un ou plusieurs capteurs (2) associés à la machine, comprenant l'opération suivante mise en œuvre par une unité de traitement informatique (10) :
- acquisition (ACQ) de signaux caractéristiques d'un fonctionnement normal de la machine et de signaux caractéristiques d'un fonctionnement anormal de la machine ; **caractérisé en ce qu'**il comprend en outre les opérations suivantes mises en oeuvre par l'unité de traitement informatique (10):
- pour chaque signal caractéristique d'un fonctionnement normal, calcul (SOUS) de signaux dit d'écart par soustraction dudit signal caractéristique d'un fonctionnement normal avec chacun des signaux caractéristiques d'un fonctionnement normal autres que ledit signal caractéristique d'un fonctionnement normal et chacun des signaux caractéristiques d'un fonctionnement anormal ;
- pour chacun des signaux d'écart, calcul d'un indicateur (INDC-SOUS) comprenant :
- le calcul d'un moment statistique du signal d'écart ou de l'énergie du signal d'écart ; ou
- un comptage du nombre de points du signal soustrait au signal caractéristique d'un fonctionnement normal présents à l'extérieur d'une enveloppe dudit signal caractéristique d'un fonctionnement normal ; ou
- un comptage du nombre de pics parmi n pics du signal caractéristique d'un fonctionnement normal qui coïncident avec un pic parmi p pics du signal soustrait audit signal caractéristique d'un fonctionnement normal ;
- détermination (CAL-TSH), à partir des indicateurs des signaux d'écart, d'un seuil de l'indicateur permettant de discriminer les signaux d'écart calculés par soustraction d'un signal caractéristique d'un fonctionnement normal avec un autre signal caractéristique d'un fonctionnement normal des signaux d'écart calculés par soustraction d'un signal caractéristique d'un fonctionnement normal avec un signal caractéristique d'un fonctionnement anormal ;
- enregistrement (ENG) du seuil de l'indicateur dans une base de données de référence (3).

2. Procédé selon la revendication 1, dans lequel les signaux délivrés par le ou les capteurs sont transformés en signaux fréquentiels préalablement au calcul des signaux d'écart.

3. Procédé selon la revendication 2, dans lequel les signaux délivrés par le ou les capteurs sont échantillonnés sur une période de mesure au cours de laquelle le régime moteur de la machine est variable, dans lequel les signaux échantillonnés sont synchronisés en fonction des variations du régime moteur sur la période de mesure, et dans lequel les signaux échantillonnés synchronisés sont transformés en signaux fréquentiels pour obtenir des raies fréquentielles ordonnées selon le régime de rotation de l'arbre.

4. Procédé selon l'une des revendications 1 à 3, dans lequel l'étape d'apprentissage comprend une phase secondaire au cours de laquelle on forme un signal caractéristique d'un fonctionnement normal par combinaison de plusieurs signaux caractéristiques d'un fonctionnement normal.

5. Procédé selon l'une des revendications 1 à 4, dans lequel le capteur (2) délivre un signal acoustique ou un signal vibratoire.

6. Produit programme d'ordinateur comprenant des instructions de code pour l'exécution des étapes du procédé selon l'une des revendications 1 à 5, lorsque ledit programme est exécuté sur un ordinateur.

7. Système d'analyse de l'état de fonctionnement d'une machine (M), telle qu'un moteur d'aéronef, comprenant un module d'acquisition (1) d'un signal délivré par un capteur associé à la machine et une base de données de référence (5) dans laquelle sont enregistrés un ou plusieurs seuils pour un ou plusieurs indicateurs calculés à partir de signaux délivrés par le capteur associé à la machine, **caractérisé en ce qu'**il comporte des moyens configurés pour mettre en œuvre les étapes du procédé selon l'une des revendications 1 à 5.

## Patentansprüche

1. Lernverfahren einer oder mehrerer Schwellen für eine oder mehrere Anzeigen des Funktionszustands einer Maschine (M), wie zum Beispiel eines Flugzeugmotors, die ausgehend von Signalen berechnet werden, welche von einem oder mehreren der Maschine zugeordneten Sensoren (2) abgegeben werden, mit dem folgenden, durch eine Informatikverarbeitungseinheit (10) ausgeführten Vorgang:
- Erfassung (ACQ) von Kennsignalen für eine normale Funktion der Maschine und von Kennsignalen für eine anomale Funktion der Maschine;
**dadurch gekennzeichnet, dass** es außerdem die folgenden, durch die Informatikverarbeitungseinheit (10) ausgeführten Vorgänge aufweist:
- für jedes Kennsignal für eine normale Funktion, Berechnung (SOUS) von sogenannten Abweichungssignalen durch Subtraktion des Kennsignals für eine normale Funktion von jedem der Kennsignale für eine normale Funktion, das nicht das Kennsignal für eine normale Funktion ist, und jedem der Kennsignale für eine anomale Funktion;
- für jedes der Abweichungssignale, Berechnung einer Anzeige (INDC-SOUS) mit:
- der Berechnung eines statistischen Moments des Abweichungssignals oder der Energie des Abweichungssignals; oder
- einer Zählung der Anzahl von Punkten des von dem Kennsignals für eine normale Funktion abgezogenen Signals, welche auf der Außenseite der Umhüllenden des Kennsignals für eine normale Funktion vorliegen; oder
- einer Zählung der Anzahl von Peaks aus n Peaks des Kennsignals für eine normale Funktion, welche mit einem Peak aus p Peaks des von dem Kennsignal für eine normale Funktion abgezogenen Signals zusammenfallen;
- Bestimmung (CAL-TSH) ausgehend von den Anzeigen der Abweichungssignale, einer Schwelle der Anzeige, die eine Unterscheidung der Abweichungssignale, die durch Subtraktion eines Kennsignals für eine normale Funktion von einem anderen Kennsignal für eine normale Funktion berechnet werden, von Abweichungssignalen erlaubt, welche durch Subtraktion eines Kennsignals für eine normale Funktion von einem Kennsignal für eine anomale Funktion berechnet werden;
- Registrierung (ENG) der Schwelle der Anzeige in einer Bezugsdatenbank (3).

2. Verfahren nach Anspruch 1, wobei die von dem oder den Sensoren abgegebenen Signale vor der Berechnung der Abweichungssignale in Frequenzsignale umgewandelt werden.

3. Verfahren nach Anspruch 2, wobei die von dem oder den Sensoren abgegebenen Signale über einen Messzeitraum ausgewählt werden, im Laufe dessen die Motordrehzahl der Maschine veränderlich ist, wobei die ausgewählten Signale in Abhängigkeit der Schwankungen der Motordrehzahl über den Messzeitraum synchronisiert werden, und wobei die ausgewählten synchronisierten Signale in Frequenzsignale umgewandelt werden, um gemäß der Drehzahl der Welle geordnete Frequenzlinien zu erhalten.

4. Verfahren nach einem der Ansprüche 1 bis 3, wobei der Lernschritt eine zweite Phase umfasst, im Laufe derer ein Kennsignal für eine normale Funktion durch Kombination von mehreren Kennsignalen für eine normale Funktion gebildet wird.

5. Verfahren nach einem der Ansprüche 1 bis 4, wobei der Sensor (2) ein Schallsignal oder ein Schwingungssignal abgibt.

6. Computerprogrammprodukt mit Codeanweisungen für die Durchführung von Verfahrensschritten nach einem der Ansprüche 1 bis 5, wenn das Programm auf einem Computer ausgeführt wird.

7. System zur Analyse des Funktionszustands einer Maschine (M), wie zum Beispiel eines Flugzeugmotors, mit einem Modul zur Erfassung (1) eines Signals, das von einem der Maschine zugeordneten Sensor abgegeben wird, und einer Bezugsdatenbank (5), in der eine oder mehrere Schwellen für eine oder mehrere Anzeigen registriert sind, welche ausgehend von Signalen berechnet werden, die durch den der Maschine zugeordneten Sensor abgegeben werden, **dadurch gekennzeichnet, dass** es Mittel zur Ausführung der Schritte des Verfahrens nach einem der Ansprüche 1 bis 5 aufweist.

## Claims

1. A learning method of one or more thresholds for one or more indicators of the operational state of a machine (M), such as an aircraft engine, calculated from signals provided by one or more sensors (2) associated with the machine, comprising the following operation, implemented by a computerised processing unit (10):
- acquiring (ACQ) signals characteristic of normal operation of the machine and of signals characteristic of abnormal operation of the machine;
**characterised in that** it further comprises the following operations, implemented by the computerised processing unit (10):
- for each of the signals characteristic of normal operation, calculating (SOUS) so-called deviation signals through subtraction of said signal characteristic of normal operation with each of the signals characteristic of normal operation other than said signal characteristic of normal operation and each of the signals characteristic of abnormal operation;
- for each of the deviation signals, calculating an indicator (INDC-SOUS) comprising:
- calculating a statistical moment of the deviation signal or the energy of the deviation signal; or
- counting the number of points in the signal subtracted from a signal characteristic of normal operation that are present outside an envelope of said signal characteristic of normal operation; or
- counting the number of peaks from amongst n peaks in the signal characteristic of normal operation which coincide with a peak from amongst p peaks of the signal subtracted from said signal characteristic of normal operation;
- determining (CAL-TSH), from the deviation signal indicators, an indicator threshold allowing the deviation signals, calculated by subtracting a signal characteristic of normal operation with another signal characteristic of normal operation, to be distinguished from deviation signals calculated by subtracting a signal characteristic of normal operation with a signal characteristic of abnormal operation;
- recording (ENG) the indicator threshold in a reference database (3).

2. The method according to claim 1, wherein the signals provided by the sensor(s) are transformed into frequency signals prior to the calculation of the deviation signals.

3. Method according to claim 2 wherein the signals provided by the sensor(s) are sampled over a measurement period during which the engine speed of the machine is variable, wherein the signals sampled are synchronised according to the variations in the engine speed over the measurement period, and wherein the synchronised sampled signals are transformed into frequency signals in order to obtain frequency lines ordered according to the shaft rotation speed.

4. Method according to any of claims 1 to 3 wherein the learning step comprises a secondary phase during which a signal characteristic of normal operation is formed by combination of several signals characteristic of normal operation.

5. Method according to one of claims 1 to 4 wherein the sensor (2) provides an acoustic signal or a vibratory signal.

6. A computer programme product comprising code instructions for the execution of the steps in the method according to any of claims 1 to 5 when said programme is executed on a computer.

7. A system for the analysis of the operational state of a machine (M), such as an aircraft engine, comprising a module for acquisition (1) of a signal provided by a sensor associated with the machine and a reference database (5) wherein are recorded one or more thresholds for one or more indicators calculated from signals provided by the sensor associated with the machine, **characterised in that** it comprises means configured for implementing the steps of the method according to any of claims 1 to 5.
